(19) Europäisches Patentamt
European Patent Office
Office européen des brevets

(11) Publication number: **0 464 957 A2**

(12) **EUROPEAN PATENT APPLICATION**

(21) Application number: **91202006.2**

(22) Date of filing: **08.09.87**

(51) Int. Cl.$^5$: **C08F 220/56**, C08F 220/18, B01D 17/04, C10G 33/04

This application was filed on 02 - 08 - 1991 as a divisional application to the application mentioned under INID code 60.

(30) Priority: **08.09.86 US 904418**
**08.09.86 US 904461**
**08.09.86 US 904548**
**08.09.86 US 904908**

(43) Date of publication of application:
**08.01.92 Bulletin 92/02**

(60) Publication number of the earlier application in accordance with Art.76 EPC: **0 260 108**

(84) Designated Contracting States:
**DE FR GB**

(71) Applicant: **EXXON RESEARCH AND ENGINEERING COMPANY**
**P.O.Box 390, 180 Park Avenue**
**Florham Park, New Jersey 07932(US)**

(72) Inventor: **Bock, Jan**
**500 Juniper Lane**
**Bridgewater, New Jersey 08807(US)**
Inventor: **Jacques, Donald Francis**
**2310 Poplar Park Drive**
**Kingwood, Texas 77339(US)**
Inventor: **Valint, Paul Louis, Jr.**
**RR No. 1, Box 248, Bellwood Park Road**
**Asbury, New Jersey 08802(US)**
Inventor: **Pacansky, Thomas John**
**319 Tamerlaine Drive**
**Houston, Texas 77024(US)**
Inventor: **Yang, Henry Wu-Hsiang**
**4818 River Hill Drive**
**Kingwood, Texas 77345(US)**

(74) Representative: **Fletcher Watts, Susan J. et al**
**ESSO Engineering (Europe) Ltd. Patents & Licences Mailpoint 72 Esso House Ermyn Way**
**Leatherhead, Surrey KT22 8XE(GB)**

(54) **Hydrophobically functionalized cationic polymers.**

(57) Novel hydrophobically associating terpolymer compositions containing cationic functionality are described. These water soluble or dispersible polymers contain both water soluble and water insoluble monomers. The water soluble monomers are ethylenically unsaturated nonionic monomers, such as acrylamide (AM), and cationic monomers, such as a salt of an amide base (C), such as 3-methacrylamidopropyltrimethylammonium chloride (MAPTAC), 2-methacrylatoethyltrimethylammonium chloride (METAC) and diallyldimethylammonium chloride (DMDAAC). The hydrophobic or water insoluble monomer is a higher alkyl(meth)acrylamide or alkyl-(meth)-acrylate (R). These polymers are referred to as CRAM. While the novel compositions of this invention impart unusual properties to water based fluids, they are extremely efficient for clean-up of waste waters containing organic contaminants and for breaking oil-in-water emulsions.

EP 0 464 957 A2

The present invention relates to hydrophobically functionalized cationic polymers, especially terpolymers, and their methods of preparation. These terpolymers can be used in the separation of oil from water in an oil-in-water emulsion, and the present invention also relates to a process for breaking an oil-in-water emulsion.

It is known from US Patent 3,691,086 that oil may be separated from an oil-in-water liquid emulsion system by contacting the system with a separation aid comprising a water soluble cationic vinyl polymer preferably in conjunction with a water soluble salt of a polyvalent metal and a silica sol. The vinyl polymer may be a homopolymer, copolymer or terpolymer. The patent lists a number of specific polymer compounds as suitable separation aids, and for the terpolymer these are acrylamide, beta-acryloyloxyethyldimethylamine and beta-acryloyloxyethyltrimethylammonium methyl sulphate terpolymer, and methacrylamide and beta-methacryloyloxyethyldimethylamine copolymer reacted with dimethyl sulphate to convert more than 50 percent of the tertiary amine groups to quarternary ammonium groups.

The present invention describes novel hydrophobically associating polymer compositions containing cationic monomers useful for the clean-up of waste waters containing organic contaminants. In addition, they find utility in processes for breaking or resolving oil-in-water emulsions, such as those produced during oil recovery operations. The polymers are preferably terpolymers consisting of acrylamide, a cationic monomer and alkyl(meth)acrylate. The cationic monomers used in these polymers are salts of an ethylenically unsaturated amine base, such as 3-methacryl-amidopropyltrimethylammonium chloride (MAPTAC), 2-meth-acrylatoethyltrimethylammonium chloride (METAC) and diallyl dimethylammonium chloride (DMDAAC). The polymers can be used for oily water treatment.

One process for preparing the instant polymers relies on the complete solubilization of the water insoluble monomer by means of a dilute solution of a suitable water soluble surfactant. The type and concentration of surfactant are chosen to produce a clear, uniform, homogeneous aqueous dispersion of the hydrophobic monomers in the presence of both nonionic and cationic water soluble monomers and, in addition, the reaction medium remains a clear, uniform, homogeneous mixture with no phase separation as the reaction proceeds to completion. The micelles formed by the surfactant are small aggregates, consisting of on the order of 50 to 200 molecules. They are stable toward phase separation and effectively disperse the water insoluble monomer on a very fine scale so that the polymerization is effected without the formation of latexes or fine particulates of water insoluble polymer.

A second process for preparing the instant polymers relies on the dissolution of the water insoluble monomer(s) into an aqueous solution of water soluble monomers by means of a water miscible mutual cosolvent. The type and concentration of miscible solvents are chosen to produce a clear, uniform, homogeneous aqueous solution of the hydrophobic monomers in the presence of both nonionic and cationic water soluble monomers. In addition, the reaction medium remains a clear, uniform, homogeneous mixture with no phase separation at low conversion. As the reaction proceeds toward completion some turbidity may occur, however, the solutions are stable toward phase separation. The water insoluble monomer remains dispersed on a very fine scale so that the polymerization is effected without the formation of particulates of water insoluble polymer.

The present invention also teaches an improved process for clean-up of waste waters containing organic contaminants. In addition, the process is useful for breaking or resolving oil-in-water emulsions, such as those produced during oil recovery operations. Both the extent of clean-up based on residual oil left in the waste water and the efficiency of clean-up based on the treat rate of additive have been found to be significantly improved using the novel process of this invention. The novel process involves the use of a low level of a water dispersible polymer, preferably a terpolymer, consisting of a water soluble nonionic monomer, such as acrylamide, a cationic monomer, such as 3-acrylamidopropyltrimethylammonium chloride, and a hydrophobic monomer, such as alkyl(meth)acrylate. These terpolymers are effective for the clean-up of waste waters containing organic contaminants and for the breaking of oil-in- water produced emulsions.

The present invention includes polymers having the following formula:

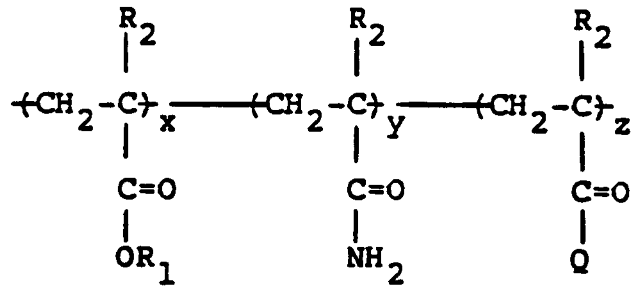

wherein $R_1$ is a $C_4$ to $C_{30}$ linear or branched alkyl, alkylcycloalkyl, or alkylaryl group, preferably $C_6$ to $C_{22}$, and most preferably $C_6$ to $C_{18}$; and $R_2$ is hydrogen or methyl; and wherein Q is a salt of an ammonium cation, such as $NH(CH_2)_nN^+ (R_{4,5,6})_3X^-$ or $O(CH_2)_nN^+\text{-}(R_{4,5,6})_3X^-$ wherein n = 1 to 6 and $R_4$, $R_5$ and $R_6$ can be hydrogen, a $C_1$ to $C_6$ linear or branched alkyl group, a $C_5$ to $C_8$ cycloalkyl, aromatic or alkylaromatic group and $X^-$ is an anion, such as chloride, bromide, or methyl or hydrogen sulfate. The mole percentage of alkyl(meth)acrylate, x, is from 0.1 to 20 mole percent, preferably 0.2 to 10 mole percent, and most preferably 0.2 to 5 mole percent. The mole percentage of acrylamide, y, is from 0 to 94.9, preferably 10 to 94.8, and most preferably 25 to 94.8. The mole percentage of the cationic monomer, z, is from 5 to 99.9, preferably 5 to 80, most preferably 5 to 70.

The present invention also includes polymer having the following formula:

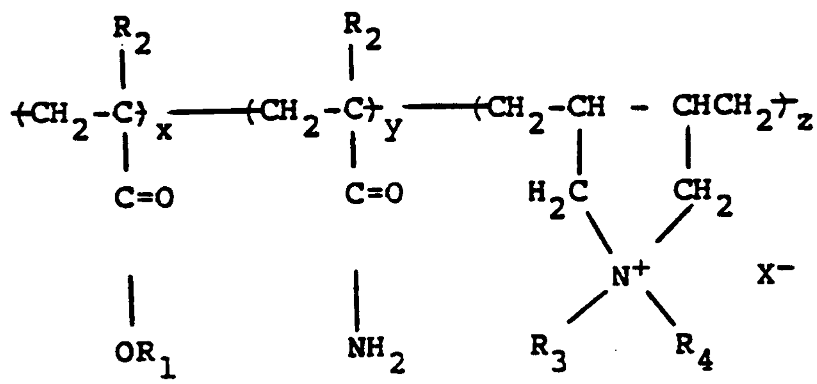

wherein $R_1$ is a $C_4$ to $C_{30}$ linear or branched alkyl, cycloalkyl group or alkylaryl group, preferably $C_6$ to $c_{22}$, and most preferably $C_6$ to $C_{18}$; $R_2$ is hydrogen or methyl; $R_3$ and $R_4$ can be hydrogen, a $C_1$ to $C_6$ linear or branched alkyl group, a $C_5$ to $C_8$ cycloalkyl, aromatic or alkylaromatic group; and $X^-$ is an anion, such as chloride, bromide or methyl sulfate. Typical but non-limiting ranges of composition of the terpolymer are represented preferably by X equal to 0.1 to 20 mole percent, more preferably 0.2 to 10 mole percent and most preferably 0.2 to 5 mole percent. The mole percentage of acrylamide, y, is preferably 0 to 94.9, more preferably 10 to 94.8, and most preferably 25 to 94.8. The mole percentage of the cationic monomer, z, is from 5 to 99.9, more preferably 5 to 80, most preferably 5 to 70.

The micellar free radical polymerization process of this invention used to prepare the instant polymers comprises the steps of forming a micellar surfactant solution of a specially chosen surfactant and the oil soluble or hydrophobic monomer in an aqueous solution of acrylamide and cationic monomer, deaerating this solution by purging with an inert gas such as nitrogen or additionally applying a vacuum; raising the temperature to the desired reaction temperature; adding sufficient free radical initiator to the reaction solution; and polymerizing for a sufficient period of time at a sufficient temperature to effect polymerization. The resulting terpolymer of acrylamide, cationic monomer and a hydrophobic monomer can be isolated from the reaction mixture by any of a variety of techniques which are well known to one skilled in the art. For example, the polymer may be recovered by precipitation using a non-solvent, such as acetone, methanol, isopropanol or mixtures thereof. The precipitated polymer can then be washed and oven dried to provide a product in the form of a free flowing powder. Alternatively, the polymer solution may be used as is by diluting with the desired aqueous solvent to the concentration of use.

The present invention describes a terpolymerization process of a nonionic, water soluble, ethylenically unsaturated monomer, such as acrylamide; a water soluble, cationic monomer from the group consisting of

salts of ammoniumalkyl(meth)acrylamides, ammoniumalkyl(meth)acrylates or diallyl dialkyl ammonium salts; and a water insoluble monomer, such as an alkyl(meth)acrylate. The process for synthesizing these terpolymers relies on solubilizing the water insoluble monomer into a predominantly aqueous media by the use of a suitable water soluble surfactant, such as dodecyltrimethylammonium chloride. When mixed with an aqueous solution of the water soluble acrylamide monomer and the water soluble cationic monomer, the surfactant solution can disperse the water insoluble monomer on an extremely fine scale so that the reaction mixture is isotropic, clear and homogeneous. These micellar reaction mixtures are free from visible oil droplets or particulates of the water insoluble monomer. The terpolymerization can, therefore, be initiated by water soluble initiators to yield terpolymers which are substantially free of visible particulates. The resultant reaction mixture remains homogeneous throughout the course of the reaction without the need for agitation with external mixers or stirrers.

Micelles formed by the surfactant which solubilize the water insoluble monomer are generally small aggregates which consist of on the order of 50 to 200 molecules. They may assume a variety of shapes, from spherical to rod-like or cylindrical, and generally are in the size range from 2 to 50 nm (20 Angstroms to 500 Angstroms) in diameter. These micelles form spontaneously upon mixing the components together, i.e., they do not require the vigorous mixing conditions required in conventional emulsion polymerization in which macroemulsions are formed. The macroemulsion droplets of the conventional emulsion polymerization process have diameters which are at least 1000 nm (10,000 Angstroms). They, therefore, tend to phase separate upon standing, leading to undesirable inhomogeneities in the produced polymer. The homogeneous micellar reaction mixtures is, on the other hand, much more stable against demixing than the formulations used in emulsion polymerization processes. Indeed, no stirring is required during the course of the micellar polymerization; the micellar aggregates remain extremely finely dispersed throughout the reaction. Moreover, the finely dispersed nature of the micellar aggregates permit the polymerization to occur in such a way that a water soluble polymer is produced which does not contain particulates or latexes of water insoluble polymers. Thus, more of the polymer is available for solution rheology control or for treating oily waste water.

The surfactants used in this process may be one of the cationic surfactants, such as alkyltrimethylammonium halides, either chlorides or bromides. Preferred are decyltrimethylammonium chloride, dodecyltrimethylammonium chloride and tetradecyltrimethylammonium chloride. For these ionic surfactants the Krafft point, which is defined as the minimum temperature for micelle formation, must be below the temperature used for the polymerization. Thus, at the conditions of polymerization, the desired surfactant will form micelles which solubilize the water insoluble monomer. To determine if a particular cationic surfactant can be used in the process of the instant invention, it must solubilize the hydrophobic monomer at a level of at least 10% of its weight. The surfactant must also form a clear, homogeneous solution in the presence of the water soluble monomers at the polymerization temperature.

Nonionic surfactants can also be used for preparing the polymers of this invention. For example, ethoxylated alcohols, ethoxylated alkyl phenols, ethoxylated dialkyl phenols, ethylene oxidepropylene oxide copolymers and polyoxyethylene alkyl ethers and esters can be used. Preferred nonionic surfactants are ethoxylated nonyl phenol with 5 to 20 ethylene oxide units per molecule, ethyoxylated dinonyl phenol containing 5 to 40 ethylene oxide units per molecule and ethyoxylated octyl phenol with 5 to 15 ethylene oxide units per molecule. Combinations of cationic and nonionic surfactants can also be used as long as the surfactants solubilize the hydrophobic monomer into an aqueous phase containing the water soluble monomers. The surfactant or mixture of surfactants will be used at concentrations above their critical micelle concentration and preferably at concentration such that only one hydrophobic monomer is associated with each surfactant micelle. Thus, the actual concentration of surfactant for a given polymerization will depend on the concentration of insoluble or hydrophobic monomers employed.

Polymerization of the water soluble and water insoluble monomers is conducted in an aqueous micellar solution containing a suitable free radical initiator. Examples of suitable water soluble free radical initiators include peroxides, such as hydrogen peroxide; persulfates, such as sodium, potassium or ammonium persulfate and water soluble azo initiators. The concentration of the free radical initiator is 0.01 to 0.5 grams per hundred grams of total monomers. Suitable oil soluble initiators are organic peroxides and azo compounds, such as azobisisobutyronitrile. Water soluble initiators are preferred, such as potassium persulfate. Redox initiation involving an oxidant, such as potassium persulfate or bromate, and a reductant, such as sodium metabisulfite or tertiary amines, such as triethyl amine, can also be used to initiate polymerization, particularly at low temperature.

Polymerizing at lower temperature results in the formation of higher molecular weight polymers, which are desirable from the standpoint of efficient aqueous viscosification and oily water clean-up. Typically it is desired to employ from .01 to 0.5 weight percent of initiator based on the weight of monomers. The

polymerization temperature is preferably 0 °C to 90 °C, more preferably 20 °C to 80 °C and most preferably 25 °C to 70 °C.

The second process for preparing the instant polymers is a solution free radical polymerization process of this invention which comprises the steps of forming a uniform solution of an oil soluble or hydrophobic monomer, a nonionic water soluble monomer, such as acrylamide, and a cationic monomer, such as MAPTAC, using a minor amount of a water miscible solvent, such as acetone, methanol or isopropanol, and a major amount of water; deaerating this solution by purging with nitrogen or, additionally, applying a vacuum; raising the temperature to the desired reaction temperature; adding sufficient free radical initiator to the reaction solution; and polymerizing for a sufficient period of time at a sufficient temperature to effect polymerization. The resulting polymer of acrylamide, cationic monomer and a hydrophobic monomer can be isolated from the reaction mixture by any variety of techniques which are well known to one skilled in the art. For example, the polymer may be recovered by precipitation using a nonsolvent, such as acetone, methanol, isopropanol or mixtures thereof. The precipitated polymer can then be washed and oven dried to provide a product in the form of a free flowing powder. Alternatively, the polymer solution may be used as is by diluting with the desired aqueous solvent to the concentration of use.

The process relies on solubilizing the water insoluble monomer into a predominantly aqueous media by the use of mutual solvents, comprising a mixture of a suitable water miscible solvent, such as a short chain alcohol or acetone and water. When mixed with the water soluble acrylamide monomer and the water soluble cationic monomer the solution remains clear and homogeneous. The water insoluble monomer is dispersed on an extremely fine scale so that the reaction mixture is isotropic, clear and homogeneous. The polymerization can, therefore, be initiated by water soluble initiators to yield polymers which are substantially free of visible particulates. The resultant reaction mixture remains homogeneous throughout the course of the reaction without the need for agitation with external mixers or stirrers.

The polymerization reaction is conducted in a suitable solvent mixture consisting of a minor amount of a water miscible solvent and a major amount of water. The water miscible solvent is an oxygenated solvent containing 1 to 4 carbon atoms, such as methanol, ethanol, isopropanol and isobutanol or acetone. The preferred alcohol solvent is isopropanol. The concentration of cosolvent alcohol or acetone in the mutual solvent mixture with water is 2 to 40 volume percent, more preferably 2 to 30 volume percent, and most preferably 5 to 25 volume percent.

Polymerization of the water soluble and water insoluble monomers is conducted in solution using a suitable free radical initiator. Examples of suitable water soluble free radical initiators include peroxides, such as hydrogen peroxide; persulfates, such as sodium, potassium or ammonium persulfate, and water soluble azo initiators The concentration of the free radical initiator is 0.01 to 0.5 grams per hundred grams of total monomers. Suitable oil soluble initiators are organic peroxides and azo compounds, such as azobisisobutyronitrile. Water soluble initiators are preferred, such as potassium persulfate or azo initiators. Redox initiation involving an oxidant, such as potassium persulfate or potassium bromate, and a reductant, such as sodium metabisulfite, or tertiary amines, such as triethyl amine, can also be used to initiate polymerization, particularly at low temperatures. Polymerizing at lower temperature results in the formation of higher molecular weight polymers which are desirable from the stand-point of efficient aqueous viscosification. Typically, it is desired to employ from .01 to 0.5 weight percent of initiator based on the weight of monomers. The polymerization temperature is preferably 0°C to 90°C, more preferably 20°C to 80°C, and most preferably 25°C to 70°C.

Molecular weight of the polymer is also an important parameter which can be controlled by the polymerization process conditions of this invention. High molecular weight polymers incorporating both cationically charged ammonium groups and hydrophobic groups can be prepared by using high monomer concentrations under conditions which provide low effective radical concentration. For example, reducing the reaction temperature or the concentration of the initiator will, in general, reduce the radical concentration and result in higher polymer molecular weights. Increased molecular weight will improve solution rheological properties and oily water treatment performance. All other things being equal, the higher the molecular weight the less soluble the polymer. Thus, as molecular weight is increased the amount of hydrophobic groups should be reduced and the amount of cationic groups increased.

To evaluate and characterize the unique and useful properties of hydrophobically associating polymers and the effect of the process conditions of this invention, dilute solution viscometric measurements were made. These measurements are particularly useful for evaluating the effect of composition and polymerization process conditions on the hydrodynamic size of the polymer in solution and the influence of associating groups. The hydrodynamic size is measured by the intrinsic viscosity which is proportional to the viscosity average polymer molecular weight. To determine the intrinsic viscosity, the reduced viscosity is first evaluated at several polymer concentrations in the dilute regime. The reduced viscosity is defined as the

incremental viscosity increase of the polymer solution relative to the pure solvent normalized with respect to the pure solvent viscosity and the polymer concentration. A plot of reduced viscosity versus polymer concentration should yield a straight line at low polymer concentrations. The intercept of this reduced viscosity plot at zero polymer concentration is defined as the intrinsic viscosity, while the slope is the Huggins' interaction coefficient times the square of the intrinsic viscosity. The Huggins' constant is a measure of polymer-solvent interactions. For hydrophobically associating polymers, it is characteristically greater than the 0.3 to 0.7 value normally observed for non-associating polymers, such as polyacrylamides.

Measurement of the dilute solution viscosity can be made with conventional Couette or capillary viscometers. A set of Ubbelhode capillary viscometers were used in this study and shear rate effects were found to be negligible in the concentration range of interest. However, since the terpolymers contain cationically charged groups, a polyelectrolyte effect was observed in dilute solution. This polyelectrolyte effect resulted in an increase in reduced viscosity with decreasing polymer concentration and tended to mask the effect of hydrophobic associations. The addition of salts, such as sodium chloride or sodium sulphate, shielded the charge repulsion causing the polyelectrolyte effect and resulted in the desired linear reduced viscosity-concentration profile. The dilute solution measurements were thus made on solutions containing 2.0 weight percent sodium chloride.

The solution viscosity of associating polymers in the semi-dilute concentration regime is dramtically different than conventional water soluble polymers. Viscosities of these solutions were measured by means of a Contraves low shear viscometer, model LS-30, using a No. 1 cup and No 1 bob. Temperatures were controlled to ± 0.1°C and measurements were made at a variety of rotational speeds corresponding to shear rate ranging from 1.0 $sec^{-1}$ to about 100 $sec^{-1}$. In contrast to conventional water soluble polymers and relatively low molecular weight, weakly associating polymers, the terpolymers prepared by the process of this invention can exhibit significant relaxation times, which result in slow equilibration. To determine steady state viscosity values at a given stress or shear rate, relatively long measurement times were employed. This effect is most evident at higher polymer concentrations, higher polymer molecular weights and in regions of strong intermolecular hydrophobic associations.

Another advantage of the polymers disclosed here over polymers currently used is the discovery that the presence of a hydrophobic group on the water soluble polymer results in a significant improvement in the breaking of reverse emulsions and the removal of emulsified or dispersed oil from waste waters. By way of example, oil droplets emulsified in water generally carry a negative surface charge or zeta potential which helps to stabilize the emulsion, keeping the droplets dispersed and making them difficult to resolve or break. Cationic polymers or surfactants are used to neutralize the surface charge. Once the charge is neutral the droplets may begin to approach each other and agglomerate or coalesce since the electrostatic repulsion responsible for a significant portion of the emulsion's stability has been eliminated. Eventually large floc formation or liquid oil formation occurs Once the droplets begin to flocculate they can begin to float since they are much larger than the starting oil droplets. As they grow in size they will rise to the surface of the water at a faster range. If a high molecular weight cationic polymer is used for charge neutralization, the polymer will accelerate the separation of the oil since the polymer is attracted to the oil droplet by coulombic attraction, hydrogen bonding or other mechanisms. In some cases low molecular weight cationic chemicals are added for charge control and then high molecular weight nonionic or anionic polymers are added to cause polymer bridging between droplets and accelerate floc formation.

To evaluate the influence of polymerization process conditions on the use of these polymers for the removal of emulsified oil from water, about 0.1 to about 200 ppm of the hydrophobically functionalized water soluble cationic polymer were added. After contacting under suitable agitation conditions for a prescribed time period, the emulsified oil droplets and polymer separated under quiescent conditions into a distinct layer from the water. The rate of mixing after polymer addition varied, depending on the type of water being treated, the amount of oil emulsified in the water, temperature and several other conditions. The concentration of oil remaining in the water after treatment with the disclosed polymers was significantly less than the concentration of oil remaining in the water after similar treatment with a similar polymer not containing the novel hydrophobe functionalization. The oil which separated as a distinct layer from the layer of water was separated from the water by conventional methods.

While it is difficult to exactly simulate a process to break oily water emulsions and oil field produced fluids, commonly referred to as reverse emulsions, it is common practice to make laboratory emulsions using crude oil from an oil production field of interest by high shear mixing the given crude into water using a Waring blender or homogenizer. The formed oil-in-water emulsion can then be diluted with water and other suitable materials to simulate the oil production field being studied. The emulsions thus produced simulate oily waste water from a given area, but are recognized as being an approximation. One would typically use these laboratory emulsions for testing chemical additives in the laboratory prior to confirmatory

testing on the actual system in the field.

A common laboratory test used to simulate a mild water clarification process in the field is what is referred to as the Jar Test. The Jar Test involves putting 500 ml of a laboratory prepared or actual field emulsion into 600 ml clear glass beakers (six at a time). Larger beakers may be used if enough fluid is available. The beakers are then placed on a six-paddle Phipps & Bird stirrer and mixed at a high rate, referred to as the fast mix period. Polymer is added at this mixing speed and timing is begun. After a specified amount of time at high speed the mixing rate is reduced to a much slower rate for another specified amount of time. The beakers are removed from the mixer and allowed to stand for another period of time. Samples of solution are removed from a point near the 250 ml mark on the beakers and tested for turbidity (NTU) using standard test equipment and oil-in-water content using one of several available methods An example of one of the oil-in-water determinations is to Freon-extract the oil from waste water and then measure its infrared absorbance relative to a standard. The object of the test is to achieve the lowest NTU or oil level using the smallest amount of polymer. The actual mixing rates and times used in the Jar test depend on the system being simulated and vary from study to study. The Jar Test, from the experience of many investigators over the years, has been shown to provide a good simulation of field clarification systems.

Another laboratory test commonly used in the current art is the Wemco 1 + 1 Laboratory Flotation Machine, available from Wemco in Sacramento, California. The technique used by the Wemco is also commonly referred to as induced air flotation The Wemco 1 + 1 Laboratory Flotation Machine is a small scale pilot unit designed to model the full scale units built by Wemco, which are commonly used in oil fields and in several other industries for water clarification and oil and solids removal. The laboratory Wemco, from the experience of several investigators over the years, has been found to provide a good simulation of what will occur in the larger unit when it is used in the evaluation of chemical additives. Laboratory prepared or actual field waste waters or emulsions are added to the test bowl of the Wemco and mixed for a few seconds with chemical additives without aeration. The air is then turned on and flotation occurs. Samples of the Wemco treated water are then withdrawn from a point near the bottom of the bowl for turbidity and oil-in-water determinations as described above.

The process for synthesizing these terpolymers relies on solubilizing the water insoluble monomer into a predominantly aqueous media by the use of a suitable water soluble surfactant, such as dodecyl trimethylammonium chloride. When mixed with an aqueous solution of the water soluble acrylamide monomer and the water soluble cationic monomer the surfactant solution can disperse the water insoluble monomer on an extremely fine scale so that the reaction mixture is isotropic, clear and homogeneous. These micellar rection mixtures are free of fisible oil droplets or particulates of the water insoluble monomer. The terpolymerization can, therefore, be initiated by water soluble initiators to yield terpolymers which are substantially free of visible particulates. The resultant reaction mixture remains homogeneous throughout the course of the reaction without the need for agitation with external mixers or stirrers.

The surfactants used in this process may be one of the water soluble surfactants, such as alkyltrimethylammonium halides, either chlorides or bromides. Preferred are decyltrimethylammonium chloride, dodecyl-trimethylammonium chloride and tetradecyltrimethylamonium chloride. For these ionic surfactants the Krafft point, which is defined as the minimum temperature for micelle formation, must be below the temperature used for the polymerization. Thus, at the conditions of polymerization the desired surfactant will form micelles, which solubilize the water insoluble monomer. Nonionic surfactants can also be used for preparing the polymers of this invention. For example,. ethoxylated alcohols, ethoxylated alky phenols, ethoxylated dialkylphenols, ethylene oxide-propylene oxide copolymers and polyoxyethylene alkyl ethers and esters can be used. Preferred nonionic surfactants are ethoxylated nonylphenol with 5 to 20 ethylene oxide units per molecule ethoxylated dinonyl phenol containing 5 to 40 ethylene oxide units per molecule and ethoxylated octyl phenol with 5 to 15 ethylene oxide units per molecule.

The advantage of the polymers disclosed here over polymers currently used is the discovery that the presence ofa hydrophobic group on the water soluble polymer results in a significant improvement in performance, namely, the breaking of reverse emulsions and the removal of emulsified or dispersed oil from waste waters. By way of example, oil droplets emulsified in water generally carry a negative surface charge or zeta potential which helps to stabilize the emulsion, keeping the droplets dispersed and making them difficult to resolve or break. Cationic polymers or surfactants are used to neutralize the surface charge. Once the charge is neutral the droplets may begin to approach each other and agglomerate or coalesce since the electrostatic repulsion responsible for a significant portion of the emulsion's stability has been eliminated. Eventually large lfoc formation or liquid oil formation occurs. Once the droplets begin to flocculate they can begin to float since they are much larger than the starting oil droplets. As they grow in size they will rise to the surface of the water at a faster rate. If a high molecular weight cationic polymer is

used for charge neutralization, the polymer will accelerate the separation of the oil since the polymer is attracted to the oil droplet by coulombic attraction, hydrogen bonding or other mechanisms. In some cases low molecular weight cationic chemicals are added for charge control and then high molecular weight nonionic or anionic polymers are added next to cause polymer bridging between droplets and accelerate floc formation.

The advantage of the disclosed polymers is related to the fact that they are water dispersible to water soluble but also contain small amounts of hydrophobic groups. Not wishing to be bound by theory, we believe that while conventional polymers can only attach themselves to oil droplets by coulombic attraction, hydrogen bonding or other mechanisms, the hydrophobic groups of these novel terpolymers can also be attracted by a hydrophobic group - hydrophobic oil droplet association. While coulombic attraction still appears to be the strongest type of attaction, the hydrophobic association or hydrophobivc effect appears to add a significant strengthening to this attraction as evidence by improved emulsion breaking and waste water clean-up. Indications are that the cationic hydrophobic polymers of this invention enable the formation of very strong floc particles. This is based on the observation that, unlike many conventional treatments, the floc articles produced by using the polymers of this invention are very difficult to redisperse Adsorption of the hydrophobic functionalized water soluble polymer on the surface of the oil droplets is believed to be the cause of this observation.

The process for the removal of the emulsified oil from the water comprises adding under suitable agitation conditions 0.1 to 200 ppm of the hydrophobically functionalized water soluble cationic polymer to the waste water containing the emulsified oil droplets. After contacting under suitable agitation conditions for a prescribed time period, the emulsified oil droplets and polymer separate under quiescent conditions into a distinct layer from the water. The disclosed polymers are used at a concentration which depends on the amount of oil present and several other factors. The rate of mixing after polymer addition varies, depending on the type of water being treated, the amount of oil emulsified in the water, temperature and several other conditions. The concentration of oil remaining in the water after treatment with the disclosed polymers is significantly less than the concentration of oil remaining in the water after similar treatment with a similar polymer not containing the novel hydrophobe functionalization. The oil layer which has separated as a distinct layer can be removed from the water by conventional methods.

This disclosure describes a process to break oily water emulsions and oil field produced fluids, commonly referred to as reverse emulsions. While it is difficult to exactly simulate these emulsions in the laboratory, it is common practice to make laboratory emulsions using crude oil from an oil production field of interest by high shear mixing the given crude into water using a Waring blender or homogenizer. The then-formed oil-in-water emulsion can then be diluted with water and other suitable materials to simulate the oil production field being studied. The emulsions thus produced simulate oily waste waters from a given area but are recognized as being an approximation. One would typically use these laboratory emulsions for testing chemical additives in the laboratory prior to confirmatory testing on the actual system in the field. While this method appears suitable for the testing of oily waste waters, the testing of chemical additives as oil field produced fluid reverse emulsion breakers in the laboratory is next to impossible and generally requires that such test work be carried out in the field since the very concentrated oil-in-water emulsions prepared in the laboratory are not stable and do not suitably simulate wellhead produced fluids.

The following Examples illustrate the present invention without, however, limiting the same hereto.

Example 1

A micellar surfactant solution was prepared in 500 ml of deoxygenated water. Hydrophobic monomer, dodecylmethcrylate, $C_{12}MA$, was dissolved in this solution, followed by acrylamide and MAPTAC. The resulting solution was carefully transferred to a 1 L Morton style resin kettle fitted with a chilled water condenser, thermometer, inert gas sparger and mechanical stirrer. The temperature was adjusted to 25° C and polymerization was initiated by the addition of $K_2S_2O_8$, followed by $Na_2S_2O_5$. After stirring for 16 hours at 25±0.2° C, the viscous solution was poured slowly into 3 L of acetone. The precipitated polymer was then masticated in a Waring blender with additional acetone, filtered and dried under vacuum at 30° C.

The composition of the terpolymer is given in Table I, and the yield and analysis of the isolated polymer given in Table II.

TABLE I

Composition of Terpolymer

| MAPTAC (Mole %) | Hydrophobe Type | Hydrophobe Mole % | Surfactant Type | Surfactant Wt.% | Monomer Concentration Wt.% | Redox Initiators $K_2S_2O_8$ [$M \times 10^4$] | Redox Initiators $Na_2S_2O_5$ [$M \times 10^4$] |
|---|---|---|---|---|---|---|---|
| 10 | $C_{12}MA$ | 1.0 | CO-710 | 5 | 9.0 | 0.81 | 0.81 |

TABLE II

Elemental Analysis of Terpolymer

| Hydrophobe Type | Hydrophobe Mole % | Cl Analysis Calculated | Cl Analysis Found | Cationic Incorporation[a] % | Conversion % |
|---|---|---|---|---|---|
| $C_{12}MA$ | 1.0 | 4.04 | 2.15 | 53 | 64.2 |

a Cationic monomer incorporation = Cl(found)/Cl(calc) x 100 corrected for polymer volatiles content.

Example 2

Micellar Terpolymerization with Cationic Monomers

A solution of 15 g of Arquad[R] (trimethyldodecyl ammonium chloride, Armak Chemical Company) in 500 ml of deoxygenated water was prepared. N-octylacrylamide, 0.4034 g, was dissolved in this solution, followed by 12.37 g of acrylamide and 9.73 g of MAPTAC. The resulting solution was carefully transferred to a 1 L Morton style resin kettle fitted with a chilled water condenser, thermometer, inert gas sparger and mechanical stirrer. The temperature was adjusted to 25°C and polymerization was initiated by the addition of 0.117 g of $K_2S_2O_8$, followed by 0.0077 g of $Na_2S_2O_5$. After stirring for 16 hours at 25±0.2°C the viscous solution could be used as in cement form or in the polymer isolated by pouring slowly into 3 L of acetone. The precipitated polymer was then masticated in a Waring blender with additional acetone, filtered and dried under vacuum at 30°C. The yield of polymer was 19.7 g (87.6%). A variety of terpolymers were prepared using similar techniques with differing types and amounts of hydrophobic N-alkylacrylamides and alkyl acrylates and water soluble cationic monomers, such as ammoniumalkyl acrylamides, ammoniumalkyl acrylates and diallyl ammonium salts.

Example 3

Preparation of Emulsion

Cody crude oil (10 g), with the free water removed, was emulsified into 495 g of distilled water containing 100 ppm of an anionic surfactant using a Waring blender or a homogenizer. The concentrated emulsion was permitted to sit overnight (approximately 18 hours) in a separatory funnel and then the bottom layer was diluted (25 g of emulsion per liter of distilled water) and salinity adjusted to 600 ppm of NaCl. This resulted in a test emulsion with the following typical properties:

| | |
|---|---|
| Turbidity: | 270 to 280 NTU |
| Oil Content: | 420 to 450 mg/l |
| pH: | 8.0 (adjusted) |

Usually a large volume of this emulsion (15 L) is prepared and any unused is discarded at the end of the day. The emulsion concentrate can be prepared several days ahead of time as long as it is removed from the separatory funnel after the prescribed aging time.

Wemco Test Method

An induced air flotation test was used in the laboratory to simulate field induced air flotation units. A Wemco 1+1 Laboratory Flotation Machine, available from Wemco in Sacramento, California was used. Three liters of emulsion prepared as described above were placed in the Wemco vessel. The mixer was turned on and maintained at 1,000 rpm and test polymer was added and mixed in for 30 seconds. The air was then turned full on while mixing continued for 120 seconds. At this time froth forms and oil floats to the surface if an effective polymer or additive is present. The unit was turned off after the 120 second aeration and the water was permitted to sit without movement for 30 seconds. Samples for turbidity and oil analysis were withdrawn by pipet from a fixed point near the bottom of the vessel after the 30 second wait.

Wemco Oily Water Tests with METAC Cationic and LMA Polymers

A Wemco test was performed on a series of polymers using an emulsion prepared as described above. The polymers tested were synthesized using 10 mole percent METAC, with and without lauryl methacrylate (LMA) hydrophobic monomer (see table below), the remainder being acrylamide. The performance data are summarized below.

ppm Oil Remaining After Treatment With Polymer
(starting oil = 482 ppm)

| Polymer | Hydrophobe | ppm Active Polymer | | | | | | |
|---|---|---|---|---|---|---|---|---|
| | | 1.0 | 1.5 | 2.0 | 2.5 | 3.0 | 4.0 | 5.0 |
| A | None | 447 | 450 | 365 | | 292 | 316 | 333 |
| B | 1.0% LMA | | 242 | 232 | 193 | 179 | 170 | 173 |

The data demonstrate that METAC cationic monomer and alkyl methacrylates may be used in this invention.

Example 4

Effect of Cationic and Hydrophobic Monomer Type on Oily Water Wemco Performance

A test similar to Example 2 was run using polymers made by the process in Example 2 of this patent application. The polymers tested were synthesized using 10 mole percent of either MAPTAC or METAC cationic monomer, with or without 1 mole percent of LMC hydrophobic monomer, the remainder being acrylamide. The chemistry and the Wemco performance data are summarized below.

ppm Oil Remaining After Treatment With Polymer
(starting oil = 482 ppm)

| Polymer | Cation | Hydro-phobe | ppm Active Polymer | | | | | | | |
|---|---|---|---|---|---|---|---|---|---|---|
| | | | 0.5 | 1.0 | 1.5 | 2.0 | 2.5 | 3.0 | 4.0 | 5.0 |
| A | METAC | None | | 429 | 335 | 404 | 414 | 436 | 425 | 432 |
| B | METAC | LMA | | | 158 | 132 | 150 | 187 | 315 | |
| C | MAPTAC | LMA | | | | 403 | | 239 | 134 | 68 |

The data confirm the benefits of hydrophobic functionalization using two types of cationic monomers and both acrylamide and acrylate linked hydrophobes.

## Claims

**1.** A polymer characterised by the formula :

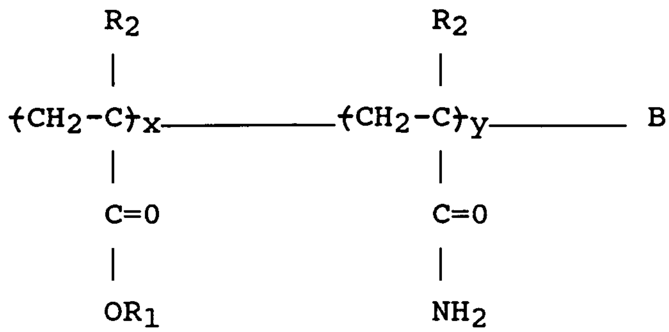

where

R$_1$ is a $C_4$ to $C_{30}$ linear or branched alkyl, alkylcycloalkyl or alkylaryl group;

R$_2$ is hydrogen or a methyl group;

x is 0.1 to 20 mole percent;

y is 0 to 94.9 mole percent; and

B is either the group

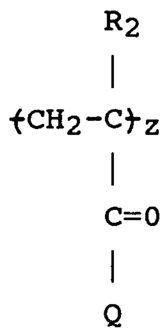

(i)

where

R$_2$ is as defined above;

z is 5 to 99.9 mole percent; and

Q is $NH(CH_2)_nN^+(R_{3,4,5})_3X^-$ or $O(CH_2)_nN^+(R_{3,4,5})_3X^-$ where n is 1 to 6; $R_3$, $R_4$ and $R_5$ are hydrogen, a $C_1$ to $C_6$ linear or branched group, or a $C_5$ to $C_8$ cycloalkyl, aromatic or alkylaromatic group; and $X^-$ is an anion selected from chloride, bromide, methyl sulfate and hydrogen sulfate,

or

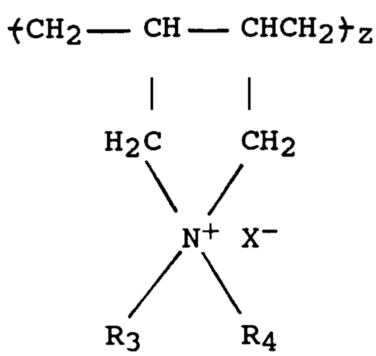

(ii)

where

$X^-$ is an anion selected from chloride, bromide and methyl sulphate; and

z, $R_3$ and $R_4$ are as defined above.

**2.** A polymer according to claim 1 wherein the monomer B is the group (i).

**3.** A polymer according to claim 1 wherein the monomer B is the group (ii).

**4.** A polymer according to any preceding claim which is a terpolymer, x being from 0.2 to 10 mole percent, y being from 10 to 94.8 mole percent, and z being from 5 to 80 mole percent.

**5.** A polymer according to any preceding claim wherein $R_1$ is a $C_6$ to $C_{18}$ linear or branched alkyl group.

**6.** A method of breaking an oil-in-water emulsion which comprises the steps of treating said oil-in-water emulsion with at least a de-emulsifying amount of a water dispersible polymer as defined in any preceding claim and separating the formed water phase from the formed oil phase.

**7.** A homogenous miscellar free radical polymerization process for the formation of terpolymer of acrylamide, a hydrophobic monomer and a cationic monomer which comprises the steps of:
a. forming a homogeneous solution in deoxygenated water of acrylamide, an alkyl(meth)acrylate hydrophobic monomer and a cationic monomer using a suitable cationic or nonionic surfactant or a mixture of both types of surfactants under a deoxygenated atmosphere;
b. adding free radical initiator to said homogeneous reaction mixture to initiate polymerization of said monomers;
c. copolymerizing said monomer mixture at a temperature of 10 ° C to 90 ° C for a sufficient period of time to form said terpolymer without the formation of substantial amounts of particulates or phase separation occurring.

**8.** A free radical polymerization process for the formation of a polymer of acrylamide, a hydrophobic monomer and a cationic monomer which comprises the steps of:
a. forming a solution in deoxygenated water of acrylamide, an alkyl(meth)acrylate hydrophobic monomer and a cationic monomer by using a water miscible solvent;
b. adding free radical initiator to said solution to form reaction mixture;
c. copolymerizing said reaction mixture at a temperature of 10 ° C to 90 ° C for a sufficient period of time to form said terpolymer.